# EUROPEAN PATENT SPECIFICATION

(11) **EP 0 349 636 B1**
(45) Date of publication and mention of the grant of the patent: **24.11.1993**
(21) Application number: 89901791.7
(22) Date of filing: 04.01.1989
(51) Int. Cl.: B60K 41/26

(54) **PARK POSITION SHIFT SELECTOR MECHANISM AND METHOD**
MECHANISMUS UND DESSEN ARBEITSWEISE ZUM POSITIONIEREN EINES GANGSCHALTHEBELS IN PARKSTELLUNG
MECANISME ET PROCEDE DE SELECTEUR DE CHANGEMENT DE VITESSE EN POSITION DE STATIONNEMENT

(30) Priority: 04.01.1988 US 140439
(43) Date of publication of application: 10.01.1990
(73) Proprietor: FURON COMPANY, Laguna Niguel, CA 92677 (US)
(72) Inventor: SWANK, David, T., Millersburg, OH 44645 (US)
(74) Representative: Cotter, Ivan John
(86) International application number: PCT/US89/00040
(87) International publication number: WO 89/06197

(56) References cited:
- US-A- 2 332 162
- US-A- 2 821 275
- US-A- 3 241 640
- US-A- 3 361 234
- US-A- 3 491 612
- US-A- 3 519 111
- US-A- 3 923 129
- US-A- 3 987 878
- US-A- 4 004 665
- US-A- 4 054 181

## Description

The invention relates to a shift selector mechanism for use in vehicles with an automatic transmission having no park setting.

The most commonly used shift selector mechanism for passenger automobiles utilizes a shift selector with one or more drive positions, a reverse position, a neutral position and a park position. Selection of the park position places the automatic transmission into its park setting. In the park setting, the transmission output shaft is locked by means of a pawl or sprag, thereby preventing the vehicle from moving. Most medium and heavy duty vehicles having automatic transmissions, on the other hand, are equipped with transmissions having no park setting, because the loads are such that it is not practical to lock and unlock the larger transmissions in this fashion. Consequently, vehicles with such transmissions have shift selectors with no park position. This situation causes no problem for those used to driving such vehicles. In order to park the vehicle, the driver simply moves the shift handle to the neutral position and sets the vehicle brakes.

Not all drivers of medium and heavy duty vehicles with automatic transmissions are familiar with such transmissions, however. Unfamiliarity is particularly common among drivers of rental trucks and school buses. Absence of a park position may confuse a driver used to passenger vehicles having a shift selector park position and unfamiliar with vehicle shift selectors having no park position. The inexperienced driver may choose to place the shift handle into one of the drive or reverse positions when parking the vehicle. This choice tends to cause clutch/band load and wear. Some drivers may even select the dangerous alternative of moving the shift lever to neutral but then fail to apply the parking brake.

Patent Specification US-A-2 821 275 discloses an automatic transmission wherein a cam plate is rotatable by a selector through park, neutral, drive, low and reverse positions and operates electrical switches to cause selection of required gears of the automatic transmission. Movement of the lever into the park position causes application of brakes of the vehicle and movement out of the park position to drive, low or reverse position causes release of the brakes.

"Automatic Transmissions" HF Tucker, Van Nostrand Rheinhold company (1980) discloses at pages 78 to 80 a transmission with a shift selector mechanism according to the preamble of claim 1 having park, reverse, neutral, drive and low positions wherein in the park position the output shaft is locked to the transmission housing but in the neutral position the rear wheels are free to turn.

According to one aspect of the invention there is provided a shift selector mechanism having a drive position, a neutral position, a reverse position and a park position for use in a vehicle with an engine, a brake and an automatic transmission having a drive setting, a neutral setting and a reverse setting, comprising:
a selector comprising a shift handle rotatable about a first axis to choose a transmission setting;
a linkage member connected to the transmission to move the transmission to its setting; and
a motion translator connecting the selector to the linkage member in a manner such that selection of the drive position engages the transmission drive setting, selection of the neutral position engages the transmission neutral setting and moving the selector in a first direction from the neutral position to the reverse position moves the linkage member in a second direction to engage the transmission reverse setting, characterised in that the motion translation comprises a toggle plate attached to the linkage member, rotatable about the first axis and so connected to the shift handle that moving the selector in the first direction from the reverse position to the park position moves the linkage member in a third direction opposite the second direction to engage the transmission neutral setting.

Thus the invention can provide for vehicles having transmissions without a park setting, a shift handle with a park position, selection of which places the automatic transmission into neutral. The desired functions can be provided within the shift mechanism without introducing load to or requiring modification of the transmission. This permits the shift mechanism to be used with existing transmissions without affecting the vehicle operation. Repair and installation can also be simplified with this approach. The shift handle or selector is connected to a transmission linkage in a manner such that, as the selector is moved from the reverse position to the park position, the movement of the linkage is translated to be reversed and moved so as to place the transmission in neutral. In a preferred form of the invention, placement of the shift handle into the park position also actuates a vehicle brake.

In the preferred mechanism, both the shift handle and the toggle plate each have a slot, as do a pair of gates which are fixed in relation to the shift handle and the toggle plate. The fixed slots are not straight like the others, but form a pair of opposing cam surfaces. A cam follower pin rides in the slots. The shape of the fixed cam slots is such that the shift handle and toggle plate rotate together through the drive, neutral and reverse positions. The fixed cam slots abruptly change direction between the reverse and park positions, causing reversal of rotation of the toggle plate with respect to rotation of the shift handle between shift handle position reverse and park. This reverse rotation returns the toggle plate and the transmission linkage member back to the neutral position as the shift handle is moved to the park position. Shifting of the handle into the park position thereby shifts the transmission into its neutral setting.

According to another aspect of the invention there is provided a method of setting an automatic transmission having one or more drive settings, a neutral setting and a reverse setting, but not having a park setting, with a selector having corresponding drive, neutral and reverse positions together with a park position, comprising:
connecting the selector to the automatic transmission in a manner such that sequentially moving a selector lever in a first direction into the drive, neutral or reverse positions correspondingly and sequentially moves a transmission linkage member in a second direction to move the transmission to respective drive, neutral and reverse settings;
characterised by connecting the selector to the transmission so that moving the selection lever in the first direction from the reverse into the park position moves the linkage member in a third direction opposite to the second direction to return the transmission to neutral setting.

A preferred embodiment of this aspect of the invention includes the step of reversing the linkage movement within the shifter mechanism. A further step includes connecting a brake to the shift lever so that the vehicle brake is set as the shift lever is moved into the park position.

The invention is diagrammatically illustrated by way of example in the accompanying drawings, in which:
Figure 1 is a perspective view of a shift selector mechanism according to the invention as mounted on a vehicle floor with a housing;
Figure 2 is a perspective view of the shift selector mechanism of Figure 1 without the housing and a shift knob;
Figure 3 is an exploded perspective view of a shift handle subassembly of the mechanism of Figure 2;
Figure 3a is a cross-sectional detail view of a hub in the shift handle subassembly of Figure 3;
Figure 4 is a side elevational view of the shift selector mechanism of Figure 2;
Figure 5 is an end elevational view of the shift selector mechanism of Figure 4;
Figure 6 is an exploded perspective view of a shift handle cam subassembly and a gate and subgate of the shift selector mechanism of Figure 2;
Figure 7a is a side elevational view of the shift selector mechanism in neutral position;
Figure 7b is a detail view of the cam arrangement in the position of Figure 7a;
Figure 8a is a side elevational view of the shift selector mechanism in reverse position;
Figure 8b is a detail view of the cam arrangement in the position of Figure 8a;
Figure 9a is a side elevational view of the shift selector mechanism in park position;
Figure 9b is a detail view of the cam arrangement in the position of Figure 9a;
Figure 10 is a side elevational view of a gear and rack alternate embodiment of shift selector mechanism according to the invention;
Figure 11 is an end elevational view of the shift selector mechanism of Figure 10; and
Figure 12 is an exploded perspective view of the gear and rack alternate embodiment shown in Figures 10 and 11.

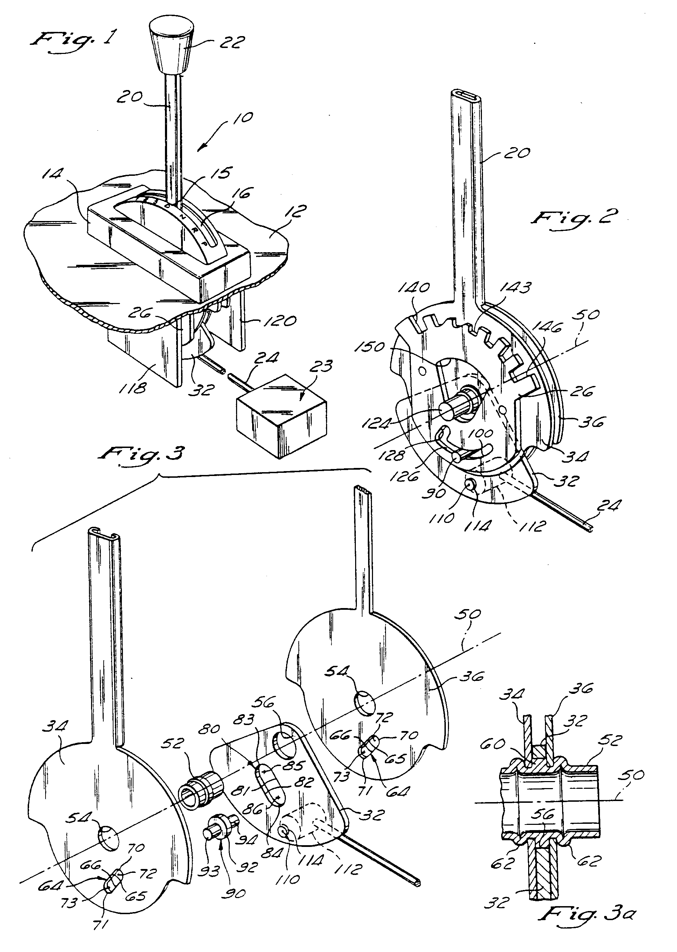

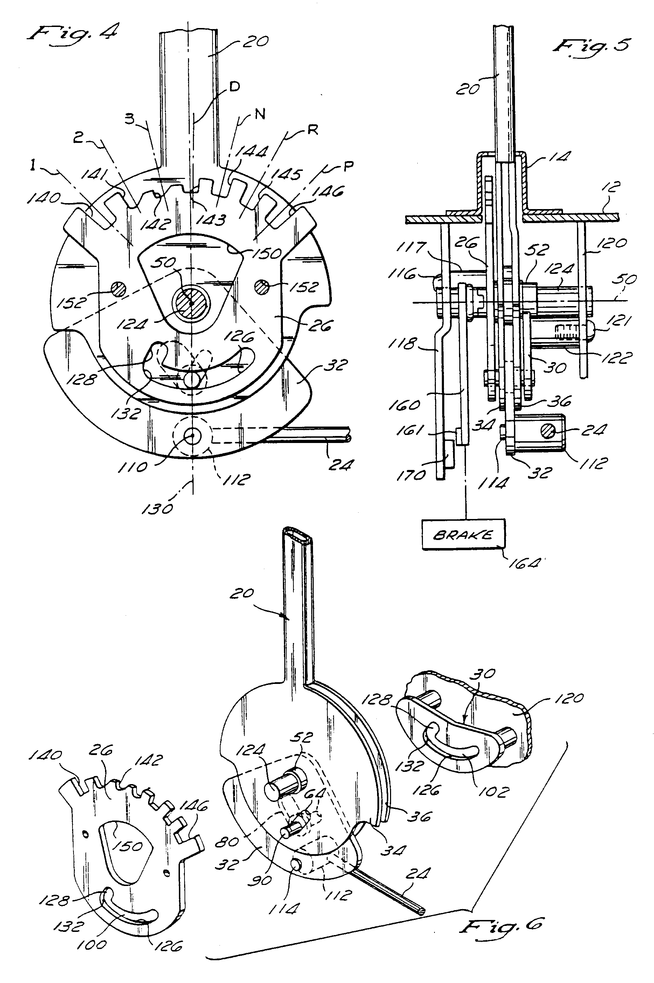

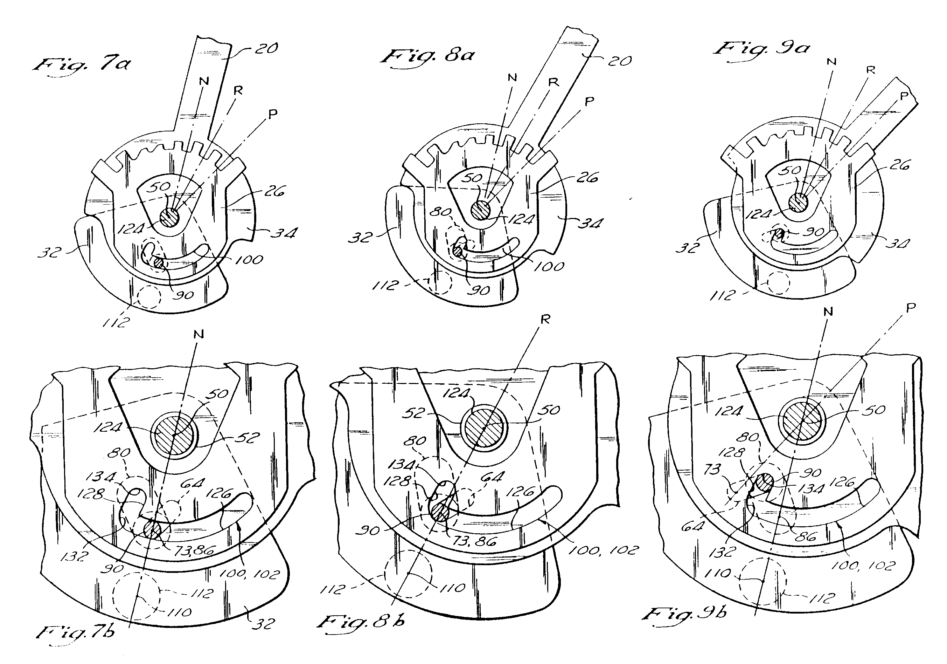

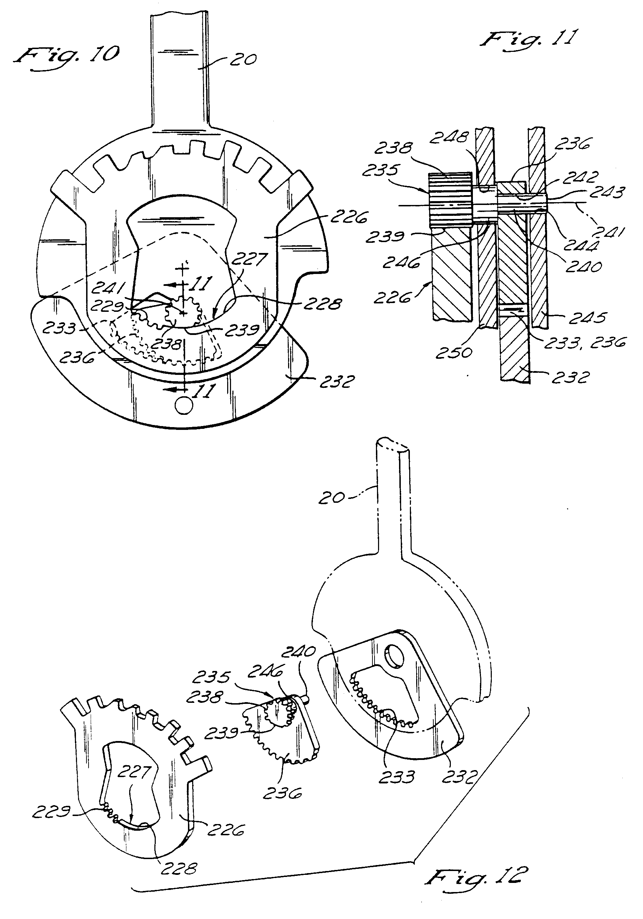

Figure 1 shows a park position shift selector mechanism 10 mounted on a vehicle floor 12. Mounted on top of the vehicle floor 12 is a shift housing 14 having marked thereon means 15 for visually indicating the position of the shift selector mechanism 10. Extending through a slot 16 in the shift housing 14 is a shift handle or selector 20, preferably topped by a shift knob 22. The park position shift mechanism 10 is attached to a conventional vehicle transmission 23 (shown in schematic representation) by means of a conventional linkage member 24 which is typically a cable which accommodates by pushing and pulling forces. The cable typically connects to a lever (not shown) in the transmission which is moved to select the transmission settings.

Referring to Figures 2 to 6, the assembled shift selector mechanism 10 includes, in addition to the shift handle 20, a gate 26, a subgate 30 and a toggle plate 32. As shown in Figure 6, the gate 26 is disposed on one side of the shift handle 20, the subgate 30 is disposed on the other side of the shift handle 20, and the toggle plate 32 is sandwiched between two shift handle paddle members 34, 36, which are connected by suitable means to form a unitary shift handle 20. The shift handle paddles 34, 36 are arranged to rotate with respect to the toggle plate 32 about a central axis 50 defined by a hub 52. Referring to Figure 3, the shift handle paddles 34, 36 have a central bore 54, and the toggle plate 32 has a central bore 56 to receive the hub 52 in a rotatable fashion. Referring to Figure 3a, the toggle plate 32 is rotatably received on a middle portion 60 of the hub 52. The handle paddles 34, 36 are placed on either side of the toggle plate 32 on the hub 52, which is swaged to form lips 62 which prevent the handle paddles 34, 36 from moving axially away from the hub middle portion 60. This swaging acts to lock the shift handle paddles 34, 36 to the hub 52 so as to prevent relative rotation therebetween. The locking effect can be enhanced by cutting apertures into the handle paddles 34, 36 so that the swaged material of the lips 62 is forced into the apertures. The hub middle portion 60 preferably forms a loose running fit with the toggle plate bore 56. The toggle plate 32 is preferably of a thickness slightly narrower than the hub middle portion 60. The toggle plate 32 is therefore free to rotate about the hub middle portion 60 and between the first and second shift handle paddles 34, 36.

The shift handle paddles 34, 36 also have identical racetrack-shaped slots 64, having two substantially straight, parallel opposing sides 65, 66 connected at upper and lower ends 70, 71 by curves formed by radii extending from upper and lower centres 72, 73. As shown in Figures 7b, 8b, and 9b, the shift handle slot lower centre 73 falls on the longitudinal axis of the shift handle 20, which is shown as the line marked N in Figure 7b, the line marked R in Figure 8b and the line marked P in Figure 9b. The central axis 50 also intersects the longitudinal axis of the shift handle 20 in all three shift handle positions.

The toggle plate 32 has formed therein a racetrack-shaped slot 80 having two substantially straight, parallel opposing sides 81, 82 connected at upper and lower ends 83, 84 by curves formed by radii extending from upper and lower centres 85, 86.

A generally cylindrical cam follower pin 90, having an enlarged middle portion 92 can fit freely into the toggle plate slot 80 and the shift handle slots 64. The cam follower pin 90 has first and second ends 93, 94 extending beyond the first and second shift handle paddles 34, 36. The first cam follower pin end 93 is rotatably received by a gate cam slot 100 in the gate 26. The second cam follower pin end 94 is received by a subgate cam slot 102 in the subgate 30.

The transmission linkage member 24 can be attached to the toggle plate 32 at various linkage attachment positions depending on the movement and orientation desired for the linkage member or push/pull cable 24. In the arrangement shown, the linkage is attached at a position 110 by means of a block 112 which is rotatably attached to the toggle plate 32 by means of a fastener 114. A line joining the linkage attachment position 110 and the centre of the toggle plate bore 56 is shown marked N in Figure 7b, marked R in Figure 8b, and marked N in Figure 9b, on which line falls the lower centre 86 of the toggle plate cam slot 80; however, the attachment position need not be at that location.

Referring to Figures 4 and 5, the gate 26 and the subgate 30 are arranged in spaced parallel relation to the first and second handle paddles 34, 36. The gate 26 is fixed in position by a fastener 116 and a gate fastener dowel 117 attached to a depending structural member 118. Similarly, the subgate 30 is attached to a depending structural member 120 by means of a subgate fastener 121 and a subgate fastener dowel 122.

The depending structural members 118, 120 support in a locking relation a shaft 124, which is collinear with the central axis 50 and is rotatably received by the hub 52. The shift handle 20 and the toggle plate 32 therefore rotate about the shaft 124, their respective rotation being directed by the cooperation of the cam follower pin 90 in the shift handle slots 64, the toggle plate slot 80, the gate cam slot 100 and the subgate cam slot 102. The shift handle slots 64 are straight slots oriented at an acute angle from the longitudinal axis of the shift handle 20. The toggle plate slot 80 is also a straight slot oriented at an acute angle from the handle axis with the handle positioned as in Figure 4. As also shown in Figure 4, the shift handle slot's lower centre 73 is aligned with the toggle plate slot's lower centre 86, and the shift handle slots 64 are at opposing acute angles from the shift handle longitudinal axis, one on each side of that axis.

The gate and subgate cam slots 100, 102 are not straight, but instead each has an arcuate portion 126 and a radial portion 128. The arcuate portion 126 extends arcuately on either side of a vertical axis 130 and as shown in Figure 4, about the central axis 50, preferably extending through an arc of approximately 80°, approximately 45° in the counterclockwise direction, and a little less than 35° in the clockwise direction to an end 132. The end 32 of the slot could be open since the handle travel is limited by the end of the slot 16 (Figure 1). The cam slot radial portion 128 extends from the end 132 of the cam slot arcuate portion 126, distal the vertical axis 130 toward the centre of the shaft 124, which is defined by the central axis 50. The width of the radial portion 128 and of the arcuate portion 126 is constant throughout the length of the gate cam slot 100 and the subgate cam slot 102.

The gate 26 preferably has slots 140, 141, 142, 143, 144, 145, 146 formed in the top thereof to receive a ball, pin or other detent member in order to lock the shift handle 20 into the position selected by the user. The gate slots 140 to 146 correspond to shift handle positions, 1, 2, 3, D, N, R and P respectively. The gate 26 also has a clearance aperture 150 to provide clearance for the shaft 124 and the hub 52. The gate 26 is also provided with gate mounting holes 152 for receipt of the gate fastener dowel 117.

Referring to Figure 5, mounted on the shaft 124 and engaged with the hub 52 is a brake actuation lever 160, which is attached to a vehicle brake 164. Rotation of the shaft handle 20 to the park position causes engagement of the vehicle brake, which acts on a suitable part of the vehicle such as the drive shaft or the wheels of the vehicle (not shown). Such a brake linkage arrangement is similar to parking brake arrangements on vehicles with manual transmissions, and needs no discussion here.

Also shown in Figure 5 is a switch 170 attached to the depending structural member 118 for activation by a cam plate 161 attached to the brake activation lever 160. The switch 170 may be a mechanical, electrical or optical detector as is commonly known in the art, and may be used to enable starting of the vehicle engine or to actuate reversing lights on the vehicle, as is also commonly known in the art.

In operation selection of the transmission setting is directly effected by the change in position of the linkage attachment position on the toggle plate 32. In the embodiment shown, the linkage attachment position 110 is vertically aligned with the longitudinal axis of the shift handle 20 for all shift handle positions except the park position. The relationship between the shift handle 20 and the toggle plate 32 is controlled by the cam follower pin 90 and the gate cam slot 100, the subgate cam slot 102, the handle paddle slots 64 and the toggle plate slot 80.

The longitudinal axis of the shift handle 20 intersects the centre of the shift handle paddle bores 54, the toggle plate bore 54 and the lower centre 73 of the shift handle slots 64. This relationship remains constant regardless of the shift handle position, but as mentioned above, the attachment need not be at the location shown. Different attachment positions are used depending on the particular installation. In Figures 7b and 8b, the shift handle axis is shown intersecting the central axis of the cam follower pin 90, the toggle plate slot lower centre 86 and the toggle plate linkage attachment position 110. These relationships remain constant for all shift handle positions except the park position. Moving the shift handle 20 past the reverse position toward the park position causes the cam follower pin 90 to reach the end of the fixed gate cam slot arcuate portion 126. The cam follower pin 90 is then free to move only back along the arcuate portion 126 or along the radial portion 128 toward the shaft 124. Further movement of the shift handle 20 toward the park position causes the cam follower pin 90 to ride up from the bottom 71 of the shift handle slots 64 and the bottom 84 of the toggle plate slot 80, and move along the cam slot radial portion 128 toward the hub 52. Movement of the cam follower pin 90 up the radial cam slot portion 128 causes the horizontal component of the movement of the cam follower pin 90 to be in the same direction as that of the shift handle 20. By way of contrast, the horizontal component of the movement of the cam follower pin 90 along the cam slot arcuate portion 126 is always in a direction opposite that of the shift handle 20. Movement of the cam follower pin 90 towards the handle slot upper end 70 and the toggle plate slot upper end 83, and the top 134 of the cam slot radial portion 128 alters the relationship between the longitudinal axis of the shift handle 20 and the toggle plate linkage attachment position.

Movement of the shift handle 20 between any of the drive, neutral or reverse positions causes movement of the cam follower pin 90 in the cam slot arcuate portion 126 and retention of the cam follower pin 90 in a fixed position at the lower end 71 of the shift handle slots 64 and the lower end 84 of the toggle plate slot 80. Accordingly, between the shift handle drive, neutral and reverse positions, the toggle plate 32 rotates with and in the same direction of rotation as the shift handle 20.

Radial movement of the cam follower pin 90 toward the shaft 124 and the central axis 50, coupled withe relative angular orientation of the shift handle slots 64 and the toggle plate slot 90 causes the toggle plate 32 to rotate with respect to, and in the opposite direction to the shift handle 20. This reverse rotation causes the toggle plate linkage attachment position 110 to return to the same position as it occupies when the shift handle 20 is in the neutral position, so that the transmission is returned to its neutral setting.

The shift mechanism shown is operated just like the normal shift mechanism on a passenger automobile. The significant difference is that moving the shift handle from the reverse position into the park position translates the movement of the handle to reverse the direction of movement of the transmission linkage and returns the transmission to the neutral setting instead of a park setting.

The shift handle 20 may be moved from the drive position, shown in Figure 1, by releasing a detent mechanism (not shown) which engages the gate slot 143. Clockwise movement of the handle from the drive position to the neutral position results in an arrangement shown in Figures 7a and 7b. With the shift handle 20 in the neutral position, the shaft 124 and the cam follower pin 90 are all located on the shift handle longitudinal axis marked N. The cam follower pin 90 rides at the lower end 84 of the toggle plate slot 80, the lower ends 71 of the shift handle slots 64 and in the cam slot arcuate portion 126. Clockwise movement of the shift handle 20 about the shaft 124 and the central axis 50 to the neutral position causes clockwise rotation of the toggle plate 32 about the central axis 50, which acts to move the linkage member 24 and the shift transmission 23 from its drive setting to its neutral setting.

Clockwise movement of the shift handle 20 to the reverse position has a similar effect, as shown in Figures 8a and 8b. The cam follower pin 90 stays at the lower end 84 of the toggle plate slot 80, the lower ends 71 of the shift handle slots 64 and in the gate cam slot arcuate portion 126, thereby maintaining the toggle plate linkage attachment position 110 on the shift handle longitudinal axis marked R. Clockwise movement of the shift handle 20 about the shaft 124 and the central axis 50 from the neutral to the reverse position therefore results in clockwise movement of the toggle plate 32 and its linkage attachment position. That clockwise movement acts to move the linkage member 24 and the shift transmission 23 from its neutral setting to its reverse setting.

Clockwise movement of the shift handle 20 from reverse to park has a different effect, as shown in Figures 9a and 9b. The cam follower pin 90 rides to the toggle plate slot upper end 83 and to the shift handle slot upper end 70. This changes the angular orientation between the shift handle longitudinal axis marked P, the cam follower pin 90 and the toggle plate 32. The pin 90 is no longer aligned with the shaft handle longitudinal axis, as in all the other shift handle positions. The cam follower pin 90 is directed by the cam slots 100, 102 in a direction radially toward the shaft 124. This movement causes the toggle plate 32 to rotate about the shaft 124 and the central axis 50 in a counterclockwise direction, opposite that of the shift handle 20. In other words, clockwise rotation of the shift handle 20 from the reverse position to the park position causes reverse or counterclockwise rotation of the toggle plate linkage attachment position from its reverse position back to its neutral position.

Counterclockwise rotation of the shift handle 20 out of the park position and into the reverse position causes the cam follower pin 90 to be moved to the toggle plate slot's lower end 84 and the shift handle slots' lower ends 71, and to be moved from the gate cam slot radial portion 128 to the gate cam slot arcuate portion 126. This causes the illustrated toggle plate linkage attachment position 110 and the cam follower pin 90 to become aligned with the shift handle longitudinal axis. In so doing, the toggle plate 32 rotates in a reverse or clockwise direction, returning the toggle plate to the reverse position.

Figures 10 to 12 show an alternate embodiment using pinion gears and gear racks instead of a cam follower pin and slots. The components of this embodiment include a gate 226, which has an internal arcuate surface 227 comprising a smooth portion 228 and an internal arcuate gear rack 229, a toggle plate 232, which has an internal arcuate gear rack 233, a gate pinion gear 235, and a toggle pinion gear 236. The gate pinion 235 has a gear portion 238 with a flat side 239 and a shaft portion 240 coaxial therewith on an axis 241. The toggle pinion 236 has a hole 242 to receive the gate pinion shaft 240 therethrough in a press-fit relation. The end 242 of the gate pinion shaft 240 extends beyond the toggle pinion 236 and is rotatably received by a hole 244 in a shift handle paddle 245. Between the gate pinion gear portion 238 and the shaft portion 240 is a gate pinion collar portion 246, which is rotatably received by a hole 248 in a shift handle paddle 250.

Rotation of the shift handle 20 between the drive, neutral and reverse positions causes the flat side 239 of the gate pinion gear portion 238 to slide along the smooth portion 228 of the gate internal arcuate surface 227 so that the gate pinion 235 does not rotate about the axis 241. Concomitantly, the toggle pinion 236 does not rotate about the axis 241. Because the toggle pinion 236 is engaged with the toggle plate internal gear rack 233, the toggle plate 232 does not rotate in relation to the shift handle 20, but instead rotates about the shaft 124 and the central axis 50 along with the shift handle 20. Clockwise rotation of the shift handle 20 results in clockwise rotation of the toggle plate 232 and counterclockwise rotation of the shift handle 20 results in counterclockwise rotation of the toggle plate 232.

Clockwise rotation of the shift handle 20 past the reverse position to the park position causes the gate pinion gear 235 to engage the internal arcuate gear rack 229 on the gate 226 and rotate in the counterclockwise direction. The toggle pinion gear 236, which is engaged with the toggle plate internal gear rack 233, rotates in the counterclockwise direction along with the gate pinion gear 235, thereby rotating the toggle plate 232 in the counterclockwise direction. Despite the clockwise rotation of the shift handle 20, the counterclockwise rotation of the toggle plate 232 causes the toggle plate linkage attachment position 110 to return to the position it occupied when the shift handle 20 was in the neutral position. Thus, placing the shift handle 20 in park causes the transmission 23 to be shifted to its neutral setting.

Counterclockwise rotation of the shift handle 20 from the park position to the reverse position causes the gate pinion gear 235 to rotate in the clockwise direction until it disengages from the gate internal gear rack 229. The toggle pinion 236 also rotates in its clockwise direction, causing the toggle plate 232 to rotate in the clockwise direction. Despite the counterclockwise rotation of the shift handle 20, the clockwise rotation of the toggle plate 232 causes the toggle plate linkage attachment position 110 to return to the reverse position, thereby shifting the transmission 23 to its reverse setting.

Other arrangements than the cam pin and gear rack embodiments disclosed herein may be used to effect desired results, including toggle levers, cam slot and bell crank, and over-centre arrangements.

## Claims

1. A shift selector mechanism having a drive position, a neutral position, a reverse position and a park position for use in a vehicle with an engine, a brake and an automatic transmission (23) having a drive setting, a neutral setting and a reverse setting, comprising:
a selector comprising a shift handle (20) rotatable about a first axis (50) to chose a transmission setting;
a linkage member (24) connected to the transmission to move the transmission (23) to its setting; and
a motion translator connecting the selector (20) to the linkage member (24) in a manner such that selection of the drive position engages the transmission drive setting, selection of the neutral position engages the transmission neutral setting and moving the selector (20) in a first direction from the neutral position to the reverse position moves the linkage member (24) in a second direction to engage the transmission reverse setting, characterised in that the motion translation comprises a toggle plate (32, 232) attached to the linkage member (24), rotatable about the first axis (50) and so connected to the shift handle (20) that moving the selector (20) in the first direction from the reverse position to the park position moves the linkage member (24) in a third direction opposite the second direction to engage the transmission neutral setting.

2. A shift selector mechanism according to claim 1, wherein rotation of the shift handle between any two of the drive, reverse or neutral positions is translated into corresponding rotation of the toggle plate (32, 232) and corresponding movement of the linkage member (24), and rotation of the shift handle (20) between the park position and one of the drive, reverse or neutral positions is translated into the opposite rotation of the toggle plate (32, 232), movement of the linkage member (24) causing shifting of the transmission.

3. A shift selector mechanism according to claim 1 or claim 2, including:
a cam follower pin (90); and
a cam (126, 128), fixed relative to the shift handle (20) and the toggle plate (32), having an arcuate portion (126) circumferentially arranged about the axis (50) and a radial portion (128) extending from a first end of the arcuate portion (126) radially toward the axis (50), and wherein the shift handle (20) has a slot (64) and the toggle plate (32) has a slot (80), the cam (26, 128) and the slots (64, 80) being engaged by the cam follower pin (90) so that movement of the shift handle (20) into or out of the park position causes the cam follower pin (90) to change positions between the cam arcuate (126) and radial (128) portions and change position in the slots (64, 80).

4. A shift selector mechanism according to claim 1 or claim 2, wherein:
the toggle plate (232) has an arcuate internal gear rack (233);
a fixed gate (226) having an arcuate internal surface (227) having a smooth portion (228) and a portion (229) defining a gear rack;
a gate pinion gear (235) having a flattened portion (239) on its outer surface attached to the shift handle (20) so that the gate pinion gear (235) rotates about a second axis (241) for selective engagement with the gate internal gear rack (229) and with the gate internal smooth surface (228); and
a toggle pinion gear (236) fixed with respect to the gate pinion gear (235) so that the toggle pinion gear (236) rotates about the second axis (241) along with the gate pinion gear (235) for engagement with the toggle plate gear rack (233).

5. A shift selector mechanism according to claim 4, wherein movement of the shift handle (20) between the drive, neutral and reverse positions causes the flat portion (239) of the gate pinion gear to slide along the gate arcuate internal smooth surface (228), thereby preventing the gate pinion gear (235) and the toggle pinion gear (236) from rotating about the second axis (241), fixing the toggle plate (232) in position with respect to the shift handle (20), and causing the toggle plate to rotate in the same direction of rotation as the shift handle, and movement of the shift handle between the park position and one of the drive neutral or reverse positions causes the gate pinion gear (235) to engage the gate arcuate internal gear rack (229), thereby causing rotation of the gate pinion gear (235) and the toggle pinion gear (236) about the second axis (241), and rotation of the toggle plate (232) about the first axis (50) in a direction of rotation opposite that of the shift handle (20).

6. A shift selector mechanism according to claim 1, including means for causing the selection of the park position to actuate the brake.

7. A shift selector mechanism according to claim 1, including means for causing the selection of the park and the neutral positions to allow the engine to be started.

8. A shift selector mechanism according to claim 1, wherein:
the shift handle can be manually-operated and is sequentially movable to the drive position, the neutral position, the reverse position and the park position;
the shift handle (20) is rotatably mounted on a shaft (124) for clockwise and counterclockwise rotation;
the toggle plate (32, 282) is rotatably attached to the shaft (124) for clockwise and counterclockwise rotation and is attached to the linkage member (24) to translate rotation of the toggle plate (32, 232) to shift the automatic transmission; and
means are provided to transmit clockwise or counterclockwise rotation of the shift handle (20) between any two of the drive, reverse or neutral positions into rotation of the toggle plate in the same direction, and to translate clockwise and counterclockwise rotation of the shift handle between the park position and one of the drive, reverse or neutral positions into rotation of the toggle plate in the opposite direction.

9. A shift selector mechanism according to claim 8, wherein:
a cam (126, 128) is fixed relative to the shift (20) handle and the toggle plate (32); and
a cam follower pin (90) is slidably received by the cam and by the shift handle and toggle plate.

10. A shift selector mechanism according to claim 8, including means responsive to moving the shift handle to the park position to actuate a brake which acts on a part of the vehicle other than the transmission to maintain the position of the vehicle.

11. A shift selecting mechanism according to claim 9, wherein:
a handle paddle has a plate-like portion (34, 36) with a bore (54) therethrough rotatably to mount the paddle on the shaft (124) and has the shift handle (20) extending outwardly with respect to the bore (54), a slot (64) is formed in the lower portion of the paddle outwardly from the bore (54) on the side of the paddle generally opposite the handle (20);
the toggle plate is rotatably mounted on the shaft (124) adjacent the paddle, a slot (50) is formed in the lower portion of the toggle plate (32) partially alignable with the paddle slot (64);
a cam follower pin (90) extends through the slots (64, 80) so that movement of the shift handle (20) moves the pin (90) and causes movement of the toggle plate (32);
a support (30) is positioned adjacent to the handle and has a slot (102) formed therein in which the cam pin (90) is positioned so as to be guided by the support slot (102) when the shaft handle (20) is moved, the support slot (102) including an arcuate portion (26) which permits movement of the cam pin (90) through a range of arcuate movement wherein the handle is sequentially movable to the drive position, the neutral position, the reverse position and the park position; and
a connector forms the linkage member and connects the toggle plate to the transmission so that movement of the shaft handle into the drive, neutral and reverse positions shifts the transmission to its corresponding settings, the support slot (102) including a radially extending portion (128) adjoining one end of the support slot arcuate portion (126), the paddle slot (64) and the toggle plate slot (80) being constructed to accommodate radial movement of the cam pin (90) when the handle (20) is moved to its park position causing the cam follower pin (90) to engage the end of the support slot arcuate portion (126) and move into the support slot radial portion (128), such movement of the cam follower pin (90) causing the toggle plate (32) to reverse direction and return to the position it occupied when the transmission was in the neutral setting, whereby the transmission is in a neutral setting when the shaft handle (20) is in the park position.

12. A method of setting an automatic transmission (23) having one or more drive settings, a neutral setting and a reverse setting, but not having a park setting, by means of a selector (10) according to any of the preceding claims having corresponding drive, neutral and reverse positions together with a park position, comprising the steps of:
connecting the selector (10) to the automatic transmission (23) in a manner such that sequentially moving a selector lever (20) in a first direction into the drive, neutral or reverse positions correspondingly and sequentially moves a transmission linkage member (24) in a second direction to move the transmission (23) to respective drive, neutral and reverse settings;
characterised by connecting the selector (10) to the transmission (23) so that moving the selector lever (20) in the first direction from the reverse into the park position moves the linkage member (24) in a third direction opposite to the second direction to return the transmission (23) to neutral setting.

13. A method according to claim 12, including the step of connecting a brake to the selector (10) so that the brake is set as the lever (20) is moved into the park position even though the transmission is moved to its neutral setting at that position.

## Patentansprüche

1. Schaltwahlmechanismus mit einer Antriebsposition, einer neutralen Position, einer Umkehrposition und einer Parkposition für die Verwendung in einem Fahrzeug mit einem Motor, einer Bremse und einem automatischen Getriebe (23), welches eine Antriebseinstellung, eine neutrale Stellung und eine Rückfahr- bzw. Umkehreinstellung hat, mit:
einem Schalthebel mit einem Verschiebehandgriff (20), der um eine erste Achse (50) drehbar ist, um eine Getriebeeinstellung auszuwählen,
einem Verbindungsteil (24), welches mit dem Getriebe verbunden ist, um das Getriebe (23) in seine Einstellung zu bewegen, und
einem Bewegungsübermittler, welcher den Schalthebel (20) mit dem Verbindungsteil (24) auf eine Art und Weise verbindet, daß die Auswahl der Antriebsposition den Eingriff der Getriebeantriebseinstellung und die Auswahl der neutralen Position den Eingriff der neutralen Getriebeeinstellung herstellt, und daß das Bewegen des Schalthebels (20) in einer ersten Richtung aus der neutralen Position in die Umkehrposition das Verbindungsteil (24) in einer zweiten Richtung bewegt, um den Eingriff der Getriebeumkehreinstellung herzustellen, dadurch gekennzeichnet, daß die Bewegungsübermittlung eine Kniehebelplatte (32,232) aufweist, welche an dem Verbindungsteil (24) angebracht ist, um die erste Achse (50) drehbar ist und so mit dem Verschiebehandgriff (20) verbunden ist, daß das Bewegen des Schalthebels (20) in der ersten Richtung aus der Umkehrposition in die Parkposition das Verbindungsglied (24) in eine dritte Richtung bewegt, welche der zweiten Richtung entgegengesetzt ist, um den Eingriff in die neutralen Getriebeeinstellung herzustellen.

2. Schaltwahlmechanismus nach Anspruch 1, wobei eine Drehung des Verschiebehandgriffes zwischen je zwei der Positionen, nämlich Antriebs-, Umkehr- oder neutraler Position, in eine entsprechende Drehung der bistabilen bzw. Kniehebelplatte (32, 232) und eine entsprechende Bewegung des Verbindungsteiles (24) übersetzt wird, und wobei die Drehung des Verschiebehandgriffes (20) zwischen der Parkposition und einer der Positionen, Antriebs-, Umkehr- oder Neutralposition, in die entgegengesetzte Drehung der Kniehebelplatte (32, 232) übersetzt wird, wobei die Bewegung des Verbindungsteiles (24) ein Verschieben des Getriebes bewirkt.

3. Schaltwahlmechanismus nach Anspruch 1 oder 2, mit:
einem Nockenfolgerstift (90), und
einem Nocken (126, 128), der relativ zu dem Verschiebehandgriff (20) und der Kniehebelplatte (32) fixiert ist und einen gekrümmten Abschnitt (126) hat, welcher in Umfangsrichtung um die Achse (50) herum angeordnet ist, und einen radialen Abschnitt (128) hat, der sich von einem ersten Ende des bogenförmigen Abschnittes (126) in radialer Richtung zur Achse (50) hin erstreckt, und wobei der Verschiebehandgriff (20) einen Schlitz (64) hat und die Kniehebelplatte (32) einen Schlitz (80) hat, wobei der Nocken (26, 128) und die Schlitze (64, 80) mit dem Nockenfolgerstift (90) in Eingriff stehen, so daß die Bewegung des Verschiebehandgriffes (20) in die Parkposition oder aus dieser heraus bewirkt, daß der Nockenfolgerstift (90) Positionen zwischen dem bogenförmigen (126) und dem radialen Abschnitt (128) des Nockens und die Position in den Schlitzen (64, 80) verändert.

4. Schaltwahlmechanismus nach Anspruch 1 oder 2, wobei:
die Kniehebelplatte (232) eine bogenförmige, innere Zahnbahn (233) hat,
ein festes Tor (226) eine bogenförmige innere Oberfläche (227) mit einem glatten Abschnitt (228) und einem eine Zahnbahn definierenden Abschnitt (229) hat,
ein Torritzel (235) einen abgeflachten Abschnitt (239) auf seiner äußeren Fläche hat, die an dem Verschiebehandgriff (20) angebracht ist, so daß das Torritzel (235) sich um eine zweite Achse (241) für den wahlweisen Eingriff mit der inneren Zahnbahn (229) des Tores und mit der inneren glatten Fläche (228) des Tores dreht, und
ein Kniehebelritzel (236) bezüglich des Torritzels (235) fixiert ist, so daß das Kniehebelritzel (236) sich mit dem Torritzel (235) um die zweite Achse (241) dreht für einen Eingriff mit der Zahnbahn (233) der Kniehebelplatte.

5. Schaltwahlmechanismus nach Anspruch 4, wobei die Bewegung des Verschiebehandgriffes (20) zwischen der Antriebs-, Neutral- und Umkehrposition bewirkt, daß der flache Abschnitt (239) des Torritzels entlang der bogenförmig gekrümmten, inneren glatten Fläche (228) des Tores gleitet und dadurch verhindert, daß das Torritzel (235) und das Kniehebelritzel (236) sich um die zweite Achse (241) drehen, wobei die Kniehebelplatte (232) in ihrer Position bezüglich des Verschiebehandgriffes (20) fixiert wird und wobei bewirkt wird, daß sich die Kniehebelplatte in derselben Drehrichtung dreht wie der Verschiebehandgriff, und wobei die Bewegung des Verschiebehandgriffes zwischen der Parkposition und einer der Positionen Antriebs-, Neutral- oder Umkehrposition bewirkt, daß das Torritzel (235) mit der gekrümmten inneren Zahnbahn (229) des Tores in Eingriff tritt und dadurch die Drehung des Torritzels (235) und des Kniehebelritzels (236) um die zweite Achse (241) bewegt, sowie die Drehung der Kniehebelplatte (232) um die erste Achse (50) in einer zur Drehung des Verschiebehandgriffes (20) entgegengesetzten Richtung.

6. Schaltwahlmechanismus nach Anspruch 1, einschließlich einer Einrichtung, um die Auswahl der Parkposition zwecks Betätigung der Bremse zu bewirken.

7. Schaltwahlmechanismus nach Anspruch 1, einschließlich einer Einrichtung, um die Auswahl der Park- und der Neutralposition zu bewirken, um den Start des Motors zu ermöglichen.

8. Schaltwahlmechanismus nach Anspruch 1, wobei:
ein Verschiebehandgriff manuell betätigbar und infolge in die Antriebsposition, die neutrale Position, die Umkehrposition und die Parkposition bewegbar ist,
der Verschiebehandgriff (20) drehbar auf einer Welle (124) für eine Drehung im Uhrzeigersinn und entgegen dem Uhrzeigersinn montiert ist,
die Kniehebelplatte (32, 282) drehbar an der Welle (124) angebracht ist für eine Drehung im Uhrzeigersinn und entgegen dem Uhrzeigersinn, und an dem Verbindungsteil (24) angebracht ist, um die Drehung der Kniehebelplatte (32) so zu übertragen, daß das automatische Getriebe verschoben wird, und
Einrichtungen vorgesehen sind, um die Drehung im oder gegen den Uhrzeigersinn des Verschiebehandgriffes (20) zwischen irgendeiner der Positionen: Antriebs-, Umkehr- oder Neutralposition, in eine Drehung der Kniehebelplatte in derselben Richtung umzusetzen, und um die Drehung des Verschiebehandgriffes im Uhrzeigersinn oder entgegen dem Uhrzeigersinn zwischen der Parkposition und einer der Positionen Antriebs-, Umkehr- oder Neutralposition, in die Drehung der Kniehebelplatte in umgekehrter Richtung umzusetzen.

9. Schaltwahlmechanismus nach Anspruch 8, wobei:
ein Nocken (126, 128) relativ zu dem Verschiebehandgriff (20) und der Kniehebelplatte (32) fixiert ist, und
ein Nockenfolgerstift (90) gleitbar von dem Nocken und dem Verschiebehandgriff und der Kniehebelplatte aufgenommen ist.

10. Schaltwahlmechanismus nach Anspruch 8, einschließlich einer Einrichtung, welche auf die Bewegung des Verschiebehandgriffes in die Parkposition anspricht, um eine Bremse zu betätigen, welche auf einen Teil des Fahrzeuges, der nicht das Getriebe ist, wirkt, um die Position des Fahrzeuges beizubehalten.

11. Schaltwahlmechanismus nach Anspruch 9, wobei:
ein Handgriff-Paddelteil einen plattenartigen Abschnitt (34, 36) hat, mit einer Bohrung (54), um drehbar das Paddelteil an der Welle (124) zu montieren, und wobei der Verschiebehandgriff (20) sich bezüglich der Bohrung (54) nach außen erstreckt, ein Schlitz (64) in dem unteren Abschnitt des Paddelteiles außerhalb der Bohrung (54) auf der Seite des Paddelteiles gebildet ist, welche dem Handgriff (20) in etwa gegenüberliegt,
die Kniehebelplatte drehbar auf der Welle (124) neben dem Paddelteil montiert ist, ein Schlitz (50) in dem unteren Abschnitt der Kniehebelplatte (32) ausgebildet und teilweise mit dem Paddelteilschlitz (64) ausrichtbar ist,
ein Nockenfolgerstift (90) sich durch die Schlitze (64, 80) erstreckt, so daß eine Bewegung des Verschiebehandgriffes (20) den Stift (90) bewegt und eine Bewegung der Kniehebelplatte (32) bewirkt,
ein Stützteil (30) neben dem Handgriff angeordnet ist und einen darin ausgebildeten Schlitz (102) hat, in welchem der Nockenstift (90) angeordnet ist, so daß er durch den Stützschlitz (102) geführt wird, wenn der Verschiebehandgriff (20) bewegt wird, der Stützschlitz (102) einen bogenförmigen Abschnitt (26) aufweist, der eine Bewegung des Nockenstiftes (90) über einen bogenförmigen Bewegungsbereich erlaubt, wobei der Handgriff nacheinander in die Antriebsposition, die Neutralposition, die Umkehrposition und die Parkposition bewegbar ist, und
ein Verbinder das Verbindungsteil bildet und die Kniehebelplatte mit dem Getriebe verbindet, so daß eine Bewegung des Verschiebehandgriffes in die Antriebs-, Neutral- und Umkehrposition das Getriebe in seine entsprechenden Einstellungen verschiebt, wobei der Stützschlitz (102) einen sich radial erstreckenden Abschnitt (128) aufweist, der an ein Ende des bogenförmigen Abschnittes (126) des Stützschlitzes anschließt, der Paddelteilschlitz (64) und der Kniehebelplattenschlitz (80) so konstruiert sind, daß sie die radiale Bewegung des Nockenstiftes (90) aufnehmen, wenn der Handgriff (20) in seine Parkposition bewegt wird, was dazu führt, daß der Nockenfolgerstift (90) mit dem Ende des bogenförmigen Abschnittes (126) des Stützschlitzes in Eingriff tritt und sich in den radialen Abschnitt (128) des Stützschlitzes bewegt, wobei eine solche Bewegung des Nockenfolgerstiftes (90) bewirkt, daß die Kniehebelplatte (32) die Richtung umkehrt und in die Position zurückkehrt, die sie eingenommen hatte, als das Getriebe sich in der neutralen Einstellung befand, wodurch das Getriebe sich in einer neutralen Einstellung befindet, wenn der Verschiebehandgriff (20) sich in der Parkposition befindet.

12. Verfahren zum Einstellen eines automatischen Getriebes (23), das eine oder mehrere Antriebseinstellungen, eine Neutralstellung und eine Umkehrstellung, jedoch keine Parkposition hat, mit Hilfe eines Schalthebels (10), entsprechend einem der vorstehenden Ansprüche, welcher entsprechende Antriebs-, Neutral- und Umkehrpositionen sowie eine Parkposition hat, mit den folgenden Schritten:
Verbinden des Schalthebels mit dem automatischen Getriebe (23) auf eine solche Art und Weise, daß das aufeinanderfolgende Bewegen eines Wahlhebels (20) in eine erste Richtung in die Antriebs-, Neutral- oder Umkehrposition in entsprechender Weise und aufeinanderfolgend ein Getriebeverbindungsglied (24) in einer zweiten Richtung bewegt, um das Getriebe (23) in entsprechende Antriebs-, Neutral- und Umkehreinstellungen zu bewegen,
gekennzeichnet durch Verbinden des Schalthebels (10) mit dem Getriebe (23) derart, daß das Bewegen des Wahlhebels (20) in der ersten Richtung aus der Umkehr- in die Parkposition das Verbindungsglied (24) in einer dritten Richtung bewegt, die entgegen der zweiten Richtung ist, um das Getriebe (23) in die neutrale Einstellung zurückzuführen.

13. Verfahren nach Anspruch 12, einschließlich des Schrittes, daß eine Bremse mit dem Schalthebel (10) verbunden wird, so daß die Bremse angezogen wird, wenn der Hebel (20) in die Parkposition bewegt wird, auch wenn das Getriebe in dieser Position in seine neutrale Einstellung bewegt wird.

## Revendications

1. Mécanisme sélecteur de vitesse ayant une position d'entraînement, une position de point mort, une position de marche arrière et une position de stationnement pour utilisation dans un véhicule avec un moteur, un frein et une transmission automatique (23) comportant une sélection d'entraînement, une sélection de point mort et une sélection de marche-arrière, comprenant :
un sélecteur comportant un levier de vitesse (20) mobile en rotation autour d'un premier axe (50) pour choisir une sélection de transmission ;
un élément de liaison (24) relié à la transmission pour déplacer la transmission (23) vers ses sélections ; et,
un transformateur de mouvement reliant le sélecteur (20) à l'élément de liaison (24) de telle façon que le choix de la position d'entraînement enclenche la sélection d'entraînement de la transmission, que le choix de la position de point mort enclenche la sélection de point mort de la transmission et que le déplacement du sélecteur (20) dans une première direction à partir de la position de point mort vers la position de marche arrière déplace l'élément de liaison (24) dans une seconde direction pour enclencher la sélection de marche arrière de la transmission ; caractérisé en ce que le transformateur de mouvement comprend une plaque à genouillère (32, 232) fixée à l'élément de liaison (24), mobile en rotation autour du premier axe (50) et reliée au levier de vitesse (20) de telle façon que le déplacement du sélecteur (20) dans la première direction à partir de la position de marche arrière vers la position de stationnement déplace l'élément de liaison (24) dans une troisième direction opposée à la seconde direction pour enclencher la sélection de point mort de la transmission.

2. Mécanisme sélecteur de vitesse selon la revendication 1, dans lequel la rotation du levier de vitesse entre deux quelconques des positions d'entraînement, de marche arrière ou de point mort est transformée en une rotation correspondante de la plaque à genouillère (32, 232) et en un déplacement correspondant de l'élément de liaison (24), et dans lequel la rotation du levier de vitesse (20) entre la position de stationnement et l'une des positions d'entraînement, de marche arrière ou de point mort est transformée en une rotation en sens contraire de la plaque à genouillère (32, 232), le déplacement de l'élément de liaison (24) provoquant le changement de vitesse de la transmission.

3. Mécanisme sélecteur de vitesse selon la revendication 1 ou la revendication 2, comprenant :
un ergot suiveur de came (90) ; et,
une came (126, 128) fixe par rapport au levier de vitesse (20) et à la plaque à genouillère (32), comportant une partie en arc (126) disposée de manière circonférentielle autour de l'axe (50) et une partie radiale (128) s'étendant d'une première extrémité de la partie en arc (126) radialement en direction de l'axe (50), et dans lequel le levier de vitesse (20) comporte une fente (64) et la plaque à genouillère (32) comporte une fente (80), la came (26, 128) et les fentes (64, 80) étant en prise avec l'ergot suiveur de came (90) de sorte que le déplacement du levier de vitesse (20) dans la position de stationnement ou hors de celle-ci provoque le changement de position de l'ergot suiveur de came (90) entre les parties en arc (126) et radiales (128) de came et son changement de position dans les fentes (64, 80).

4. Mécanisme sélecteur de vitesse selon la revendication 1 ou la revendication 2, dans lequel :
la plaque à genouillère (232) possède une crémaillère interne (233) ;
une grille fixe (226) comportant une surface interne en arc (227) ayant une partie lisse (228) et une partie (229) définissant une crémaillère ;
un pignon de grille (235) comportant une partie aplatie (239), sur sa surface extérieure fixée au levier de vitesse (20), de sorte que le pignon de grille (235) tourne autour d'un second axe (241) pour venir en prise de manière sélective avec la crémaillère interne de grille (229) et avec la surface lisse interne de grille (228) ; et,
un pignon de genouillère (236) fixe par rapport au pignon de grille (235) de sorte que le pignon de genouillère (236) tourne autour du second axe (241) en même temps que le pignon de grille (235) pour être en prise avec la crémaillère de plaque à genouillère (233).

5. Mécanisme sélecteur de vitesse selon la revendication 4, dans lequel le déplacement du levier de vitesse (20) entre les positions d'entraînement, de point mort et de marche arrière amène la partie plate (239) du pignon de grille à coulisser le long de la surface lisse interne, en arc, de grille (228), en empêchant ainsi le pignon de grille (235) et le pignon de genouillère (236) de tourner autour du second axe (241), en immobilisant la plaque à genouillère (232) en position par rapport au levier de vitesse (20), et en amenant la plaque à genouillère à tourner dans le même sens de rotation que le levier de vitesse ; et dans lequel le déplacement du levier de vitesse entre la position de stationnement et l'une des positions d'entraînement, de point mort ou de marche arrière amène le pignon de grille (235) a être en prise avec la crémaillère interne, en arc, de grille (229), en provoquant ainsi la rotation du pignon de grille (235) et du pignon de genouillère (236) autour du second axe (241), et la rotation de la plaque à genouillère (232) autour du premier axe (50) dans un sens de rotation contraire à celui du levier de vitesse (20).

6. Mécanisme sélecteur de vitesse selon la revendication 1, comprenant un moyen pour faire en sorte que le choix de la position de stationnement actionne le frein.

7. Mécanisme sélecteur de vitesse selon la revendication 1, comprenant un moyen pour faire en sorte que le choix des positions de stationnement et de point mort permettent au moteur d'être démarré.

8. Mécanisme sélecteur de vitesse selon la revendication 1, dans lequel :
le levier de vitesse peut être manoeuvré manuellement et est mobile séquentiellement vers la position d'entraînement, la position de point mort, la position de marche arrière et la position de stationnement ;
le levier de vitesse (20) est monté mobile en rotation sur un arbre (124) pour rotation dans le sens des aiguilles d'une montre et dans le sens contraire des aiguilles d'une montre ;
la plaque à genouillère (32, 282) est fixée mobile en rotation à l'arbre (124) pour rotation dans le sens des aiguilles d'une montre et dans le sens contraire des aiguilles d'une montre et est fixée à l'élément de liaison (24) pour transformer la rotation de la plaque à genouillère (32, 232) en un changement de vitesse de la transmission automatique ; et,
des moyens sont prévus pour transformer la rotation dans le sens des aiguilles d'une montre ou dans le sens contraire des aiguilles d'une montre, du levier de vitesse (20) entre deux quelconques des positions d'entraînement, de marche arrière, ou de point mort, en une rotation de la plaque à genouillère dans le même sens, et pour transformer la rotation dans le sens des aiguilles d'une montre et dans le sens contraire des aiguilles d'une montre, du levier de vitesse entre la position de stationnement et l'une des positions d'entraînement, de marche arrière, ou de point mort, en une rotation de la plaque à genouillère dans le sens contraire.

9. Mécanisme sélecteur de vitesse selon la revendication 8, dans lequel :
une came (126, 128) est fixe par rapport au levier de vitesse (20) et à la plaque à genouillère (32) ; et,
un ergot suiveur de came (90) est reçu de manière coulissante dans la came et dans le levier de vitesse et la plaque à genouillère.

10. Mécanisme sélecteur de vitesse selon la revendication 8, comprenant un moyen sensible au fait d'amener le levier de vitesse dans la position de stationnement pour actionner un frein qui agit sur un élément du véhicule autre que la transmission pour maintenir la position du véhicule.

11. Mécanisme sélecteur de vitesse selon la revendication 9, dans lequel :
une ailette de levier de vitesse possède une partie de forme plate (34, 36) avec un alésage (54) pour y monter par ce moyen de façon mobile en rotation l'ailette sur l'arbre (124) et le levier de vitesse (20) s'étend vers l'extérieur par rapport à l'alésage (54), une fente (64) est formée dans la partie inférieure de l'ailette vers l'extérieur de l'alésage (54) du côté de l'ailette globalement opposé au levier de vitesse (20) ;
la plaque à genouillère est montée mobile en rotation sur l'arbre (124) à coté de l'ailette, une fente (50) est formée dans la partie inférieure de la plaque à genouillère (32) pouvant s'aligner partiellement avec la fente d'ailette (64) ;
un ergot suiveur de came (90) s'étend dans les fentes (64, 80) de sorte que le déplacement du levier de vitesse (20) déplace l'ergot (90) et provoque le déplacement de la plaque à genouillère (32) ;
un support (30) est placé à côté du levier de vitesse et possède une fente (102) formée à l'intérieur, dans laquelle l'ergot de came (90) est placé de manière à être guidé par la fente de support (102) lorsque le levier de vitesse (20) est déplacé, la fente de support (102) comprenant une partie en arc (26) qui permet le déplacement de l'ergot de came (90) sur une certaine distance de déplacement en arc, dans lequel le levier de vitesse est mobile de manière séquentielle vers la position d'entraînement, la position de point mort, la position de marche arrière et la position de stationnement ; et,
un connecteur constitue l'élément de liaison et relie la plaque à genouillère à la transmission de sorte que le déplacement du levier de vitesse dans les positions d'entraînement, de point mort et de marche arrière place la transmission dans ses sélections correspondantes, la lente de support (102) comprenant une partie s'étendant radialement (128) rejoignant une extrémité de la partie en arc de fente de support (126), la lente d'ailette (64) et la lente de plaque à genouillère 80) étant structurées de façon à permettre le déplacement radial de l'ergot de came (90) lorsque le levier de vitesse (20) est amené dans sa position de stationnement en faisant en sorte que l'ergot suiveur de came (90) contacte l'extrémité de la partie en arc de fente de support (126) et vienne dans la partie radiale de fente de support (128), un tel déplacement de l'ergot suiveur de came (90) faisant en sorte que la plaque à genouillère (32) inverse son sens et revienne dans la position qu'elle occupait lorsque la transmission était dans la sélection de point mort, ce par quoi la transmission est dans une sélection de point mort lorsque le levier de vitesse (20) est dans la position de stationnement.

12. Procédé de sélection pour une transmission automatique (23) ayant une ou plusieurs sélections d'entraînement, une sélection de point mort et une sélection de marche arrière, mais n'ayant pas de sélection de stationnement, au moyen d'un sélecteur (10) selon l'une quelconque des revendications précédentes ayant des positions d'entraînement, de point mort et de marche arrière correspondantes en même temps qu'une position de stationnement comprenant :
la connexion du sélecteur (10) à la transmission automatique (23) de telle façon qu'en amenant de manière séquentielle un levier de vitesse (20), dans une première direction, dans des positions d'entraînement, de point mort ou de marche arrière, on amène de manière correspondante et séquentiellement un élément de liaison de transmission (24) dans une seconde direction pour amener la transmission (23) dans les sélections respectives d'entraînement, de point mort et de marche arrière ;
caractérisé par la connexion du sélecteur (10) à la transmission (23) de sorte qu'en amenant le levier de vitesse (20) dans la première direction, à partir de la position de marche arrière, dans la position de stationnement, on déplace l'élément de liaison (24) dans une troisième direction, opposée à la seconde direction, pour ramener la transmission (23) à la sélection de point mort.

13. Procédé selon la revendication 12, incluant l'étape de connexion d'un frein au sélecteur (10) de sorte que le frein est serré lorsque le levier (20) est amené dans la position de stationnement bien que la transmission soit amenée dans sa sélection de point mort pour cette position.
